# EUROPEAN PATENT APPLICATION

(11) **EP 3 716 150 A1**
(43) Date of publication of application: **30.09.2020**
(21) Application number: 20164881.3
(22) Date of filing: 23.03.2020
(51) Int. Cl.: G06K 9/62, G06K 9/32

(54) **IMPROVED IMAGE SEGMENTATION USING A NEURAL NETWORK TRANSLATION MODEL**

(30) Priority: 27.03.2019 US 201916367077
(71) Applicant: Nvidia Corporation, Santa Clara, CA 95050 (US)
(72) Inventor: VORONTSOV, Eugene, Santa Clara, CA 95050 (US); BYEON, Wonmin, Santa Clara, CA 95050 (US); DE MELLO, Shalini, Santa Clara, CA 95050 (US); JAMPANI, Varun, Santa Clara, CA 95050 (US); LIU, Ming-Yu, Santa Clara, CA 95050 (US); MOLCHANOV, Pavlo, Santa Clara, CA 95050 (US)
(74) Representative: Kraus & Weisert Patentanwälte PartGmbB

(57) **Abstract**

The neural network includes an encoder, a common decoder, and a residual decoder. The encoder encodes input images into a latent space. The latent space disentangles unique features from other common features. The common decoder decodes common features resident in the latent space to generate translated images which lack the unique features. The residual decoder decodes unique features resident in the latent space to generate image deltas corresponding to the unique features. The neural network combines the translated images with the image deltas to generate combined images that may include both common features and unique features. The combined images can be used to drive autoencoding. Once training is complete, the residual decoder can be modified to generate segmentation masks that indicate any regions of a given input image where a unique feature resides.

## Description

### BACKGROUND

In a conventional approach to image segmentation, a neural network is trained to identify specific features of images based on training data that includes a labeled set of images. For example, a neural network could be trained to identify instances of automobiles within images based on training data that includes images of automobiles and labels indicating regions of those images where the automobiles reside. One drawback of this approach is that the training data needs to be manually generated by a human. In particular, a human has to visually evaluate each image in the training data and then generate one or more labels indicating where in those images the features of interest reside. This process can be very time-consuming. In addition, some types of training data, such as that associated with medical imaging, can only be generated by experts who may not be readily available.

### BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
Figure 1 illustrates a system configured to implement one or more aspects of various embodiments.
Figure 2 is a more detailed illustration of the neural network of Figure 1, according to various embodiments.
Figure 3 illustrates how the neural network of Figure 1 can be trained, according to various embodiments.
Figure 4 illustrates how the neural network of Figure 1 generates a segmentation mask, according to various embodiments.
Figure 5 illustrates how the neural network of Figure 1 enhances spatial detail of translated images, according to various embodiments.
Figure 6 is a flow diagram of method steps for translating an image to generate a segmentation mask, according to various embodiments.
Figure 7 is a block diagram illustrating a computer system configured to implement one or more aspects of various embodiments.
Figure 8 is a block diagram of a parallel processing unit (PPU) included in the parallel processing subsystem of Figure 7, according to various embodiments.
Figure 9 is a block diagram of a general processing cluster (GPC) included in the parallel processing unit (PPU) of Figure 8, according to various embodiments.

### DETAILED DESCRIPTION

In the following description, numerous specific details are set forth to provide a more thorough understanding of the various embodiments. However, it will be apparent to one skilled in the art that the inventive concepts may be practiced without one or more of these specific details.

As noted above, conventional approaches to image segmentation involve training neural networks based on manually-labeled training data. Generating this training data can be very time-consuming. Furthermore, some types of training data can only be generated by experts who might not be readily available to manually label images.

To address this issue, various embodiments include a neural network that is trained to translate input images that may include features of interest into translated images that do not include those features of interest. The input images can be compared to the translated images to reveal regions of the input images where the features of interest reside.

In one embodiment, the neural network is trained based on weakly-labeled training data. The weakly-labeled training data includes a first set of images that include a feature of interest and a second set of images that do not include the feature of interest. The weakly-labeled training data also includes a label for each image indicating the presence or absence of the feature of interest. The feature of interest is unique to the first set of images and may therefore be referred to herein as a "unique feature." The two sets of images also include various other features that are included in both sets of images. Those features may be referred to herein as "common features."

In one embodiment, the neural network includes an encoder, a common decoder, and a residual decoder. The encoder and decoders are trained based on input images included in the weakly-labeled training data and corresponding labels. The encoder encodes input images into a latent space. The latent space disentangles unique features of the input images from common features of the input images. The common decoder decodes common features resident in the latent space to generate translated images which lack the unique features. The residual decoder decodes unique features resident in the latent space to generate image deltas corresponding to the unique features. The neural network combines the translated images with the image deltas to generate combined images that may include both common features and unique features. The combined images can be used to drive training of the neural network via autoencoding. Once training is complete, the residual decoder can be modified to generate segmentation masks instead of image deltas. A given segmentation mask indicates any regions of a given input image where a unique feature resides.

At least one technological advantage of the disclosed techniques relative to the prior art is that images can be accurately segmented based only on weakly-labeled training data. Accordingly, features of interest can be readily identified within images without needing to perform a complex manual process to generate training data. Another technological advantage of the disclosed techniques relative to the prior art is that fewer reference segmentations are needed to train the neural network compared to conventional approaches, thereby simplifying and expediting the training process. These technological advantages represent multiple technological advancements relative to prior art approaches.

### System Overview

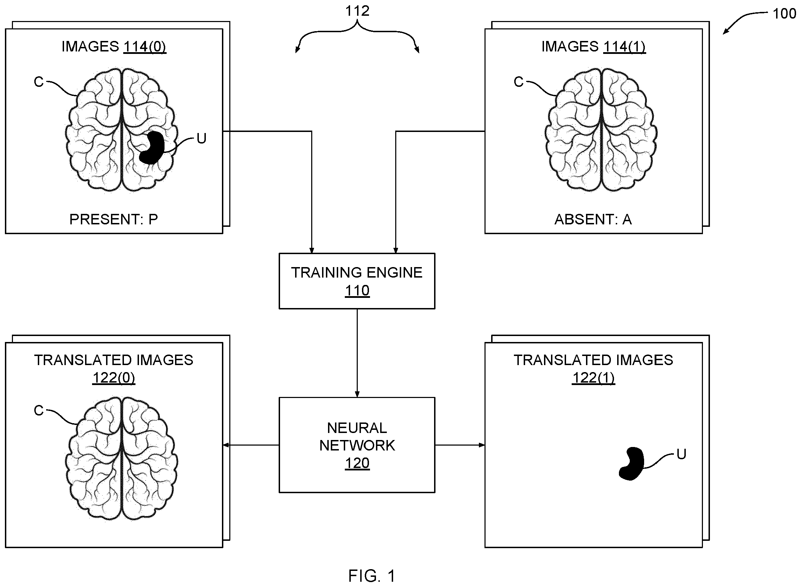

Figure 1 illustrates a system 100 configured to implement one or more aspects of various embodiments. As shown, in one embodiment, a system 100 includes a training engine 110 and a neural network 120.

In one embodiment, training engine 110 is configured to train neural network 120 based on weakly-labeled training data 112 to generate translated images 122(0) and 122(1). Weakly-labeled training data 112 includes images 114(0) and images 114(1). Images 114(0) include a feature of interest and images 114(1) do not include the feature of interest. Images 114(0) and 114(1) are labeled to indicate the presence or absence of the feature of interest. Images 114(0) are labeled "present" (P) to indicate that the feature is present in images 114(0). Images 114(1) are labeled "absent" (A) to indicate that the feature is absent from images 114(1). The feature of interest may be referred to herein as a "unique feature" because the feature uniquely occurs in images 114(0). Images 114(0) and 114(1) share certain features in common. These features are referred to herein as "common features."

In one embodiment, in the example shown in Figure 1, images 114(0) and 114(1) are cross-sectional images of a brain. Both images 114(0) and 114(1) include features typically associated with the brain, including, for example, cerebral hemispheres, fissures, and gyri. These features (indicated with a "C") are common to both images 114(0) and 114(1). Additionally, images 114(0) include an abnormality that could be, for example, a brain tumor. This feature (indicated with a "U") uniquely occurs in images 114(0). Although the common features and unique features are indicated in Figure 1 for clarity, these features are not explicitly labeled in weakly-labeled training data 112. As described above, weakly-labeled training data 112 indicates the presence or absence of unique features within images 114(0) and 114(1).

In one embodiment, training engine 110 trains neural network 120 to encode images 114(0) and 114(1) into a latent space based on weakly-labeled training data 112. The latent space disentangles unique features and common features. Training engine 110 also trains neural network 120 to decode the common features from the latent space to generate translated images 122(0), which lack the unique features. Training engine 110 further trains neural network 122(1) to decode the unique features (in conjunction with the common features) from the latent space to generate translated images 122(1), which lack the common features. Translated images 122(1) may be represented as image differences, in some embodiments.

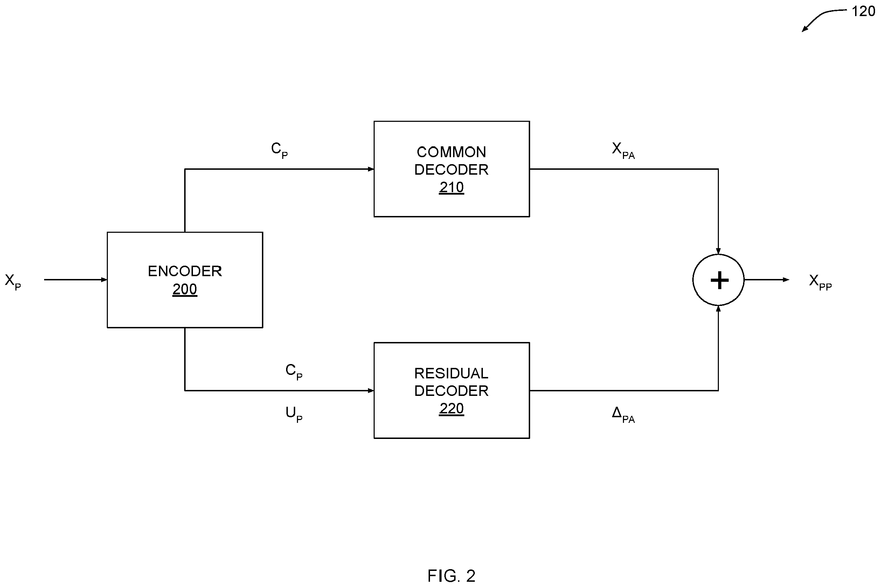

In one embodiment, during training, translated images 122(0) and 122(1) can be combined to reconstruct images 114(0) and 114(1). Training engine 114 can then perform an autoencoding procedure to train neural network 120 based on those reconstructed images. Once neural network 120 is trained in this manner, a modified version of neural network 120 can generate a segmentation mask instead of generating translated images. The segmentation mask indicates regions of an image where unique features reside. The various techniques described above are also described in greater detail below in conjunction with Figures 2-6.

### Translation Model

Figure 2 is a more detailed illustration of the neural network of Figure 1, according to various embodiments. As shown, in one embodiment, neural network 120 includes an encoder 200, a common decoder 210, and a residual decoder 220.

In one embodiment, encoder 200 is a multi-layer convolutional neural network that encodes input images into a latent space. The latent space distinguishes common features and unique features of those input images. Common decoder 210 is a multi-layer deconvolutional neural network that decodes common features from the latent space to generate translated versions of the input images that include the common features but do not include unique features. Residual decoder 220 is a multi-layer deconvolutional neural network that decodes unique features from the latent space, based on the common features, to generate translated images that include the unique features but do not include the common features. These translated images can be combined to reconstruct the input images and drive training via autoencoding.

In one embodiment, in operation, encoder 200 receives an input image X_{P} that is labeled to indicate the presence of one or more unique features. Xₚ could be included, for example, in images 114(0) of Figure 1. Encoder 200 encodes Xₚ into the latent space to disentangle the common features from the unique features, thereby generating common features Cₚ and unique features Uₚ. Common decoder 210 decodes common features Cₚ to generate X_{PA}. X_{PA} is a translated version of X_{P} that no longer includes the unique features. Residual decoder 220 decodes unique features Uₚ based on common features C_{P} to generate Δ_{PA}. Δ_{PA} is a translated version of X_{P} that no longer includes the common features. Δ_{PA} is expressed as a residual difference between images and may include pixel values that, when combined with X_{PA}, produce a translated image X_{PP}. During training, encoder 200, common decoder 210, and residual decoder 220 can be modified in order to reduce the difference between X_{P} and X_{PP}.

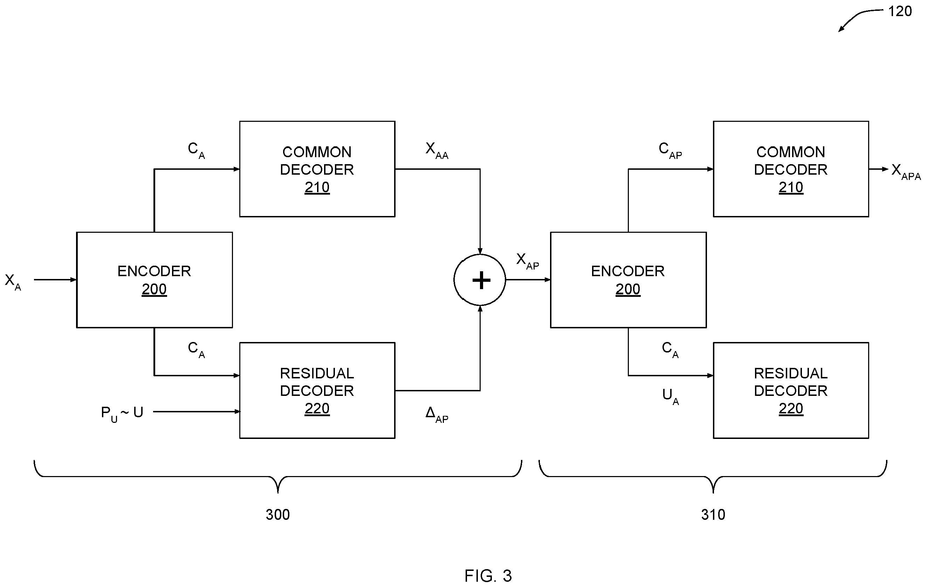

In one embodiment, training engine 110 of Figure 1 includes a generative adversarial network (GAN) that discriminates between X_{P} and X_{PP} during training and modifies at least one of encoder 200, common decoder 210, and residual decoder 220 to reduce the difference between X_{P} and X_{PP}. Those familiar with autoencoder training will understand how the GAN can be implemented to improve image translation from X_{P} to X_{PP} Additional training techniques can also be implemented to further train the various elements of neural network 120, as described in greater detail below in conjunction with Figure 3.

Figure 3 illustrates how the neural network of Figure 1 can be trained, according to various embodiments. As shown, in one embodiment, neural network 120 is configured to operate in at least two cycles. Neural network 120 can be configured in this manner during training in order to improve the translation capabilities of encoder 200, common decoder 210, and residual decoder 220.

In one embodiment, neural network 120 operates during a first cycle 300 to translate an input image X_{A} that does not include one or more unique features into a translated image X_{AP} that does include unique features. In particular, encoder 200 encodes input image X_{P} into the latent space to generate common features C_{A}. Unique features are not present in input image X_{A}, and so encoder 200 does not generate unique features U_{A} within the latent space. Common decoder 210 decodes common features C_{A} to generate X_{AA}. X_{AA} is a translated version of X_{A} that, like X_{A}, does not include unique features. Residual decoder 220 obtains random samples of the latent space corresponding to unique features and then generates Δ_{AP} to reflect a residual difference between those random samples and the common features C_{A} generated via encoder 200. X_{AA} and Δ_{AP} are combined to generate translated image X_{AP}, thereby completing cycle 300.

Subsequently, neural network 120 operates during a second cycle 310 to re-translate translated image X_{AP} into a translated image X_{APA} that no longer includes the unique feature introduced via cycle 300. In particular, encoder 200 encodes image X_{AP} into the latent space to generate common features C_{AP}. Encoder 200 can also generate unique features to be input to residual decoder 220, as described above in conjunction with cycle 300, although in cycle 310 these unique features can be neglected. Common decoder 210 then decodes common features C_{AP} to generate translated image X_{APA}. Translated image X_{APA} does not include unique features and can therefore be compared to X_{A} in order to drive training via an autoencoding process. Specifically, encoder 200, common decoder 210, and residual decoder 220 can be trained in order to reduce the difference between X_{A} and X_{APA}. This particular training approach may cause encoder 200, common decoder 210, and residual decoder 220 to translate images with greater accuracy in the presence of noise and can therefore cause neural network 120 to be more robust against noise.

In one embodiment, the various techniques described in conjunction with Figures 2-3 can be adapted to translate an input image X_{P} to generate a translated image X_{PAP} that can be used for training purposes. For example, the technique described in conjunction with Figure 2 could be applied to translate input image X_{P} to generate translated image X_{PA}, as previously described. Then, X_{PA} could be input to cycle 300 of Figure 3, thereby generating X_{PAP}. Via this process, unique features of X_{P} are removed and then re-introduced. Encoder 200, common decoder 210, and residual decoder 220 can be trained in order to reduce the difference between X_{P} and X_{PAP}.

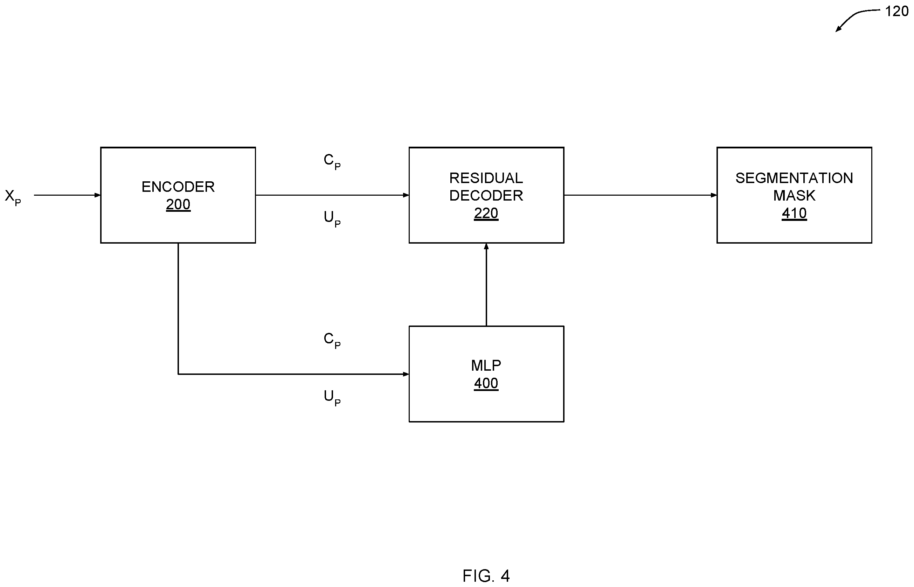

In one embodiment, once neural network 120 is trained in the manner described above, various modifications can be applied to neural network 120 to facilitate the generation of segmentation masks. These modifications are described in greater detail below in conjunction with Figure 4.

### Generating Segmentation Masks

Figure 4 illustrates how the neural network of Figure 1 generates a segmentation mask, according to various embodiments. As shown, in one embodiment, neural network 120 includes a multi-layer perceptron (MLP) 400 that is coupled between encoder 200 and residual decoder 220. MLP 400 includes two or more layers and is configured to perform scale and shift operations when decoder 220 decodes common features and unique features from the latent space.

In one embodiment, MLP 400 can be incorporated into neural network 120 in order to implement an approach referred to in the art as "adaptive instance normalization." When implementing adapting instance normalization, MLP 400 adjusts one or more normalization parameters associated with residual decoder 220 to cause encoder 200 to generate segmentation masks instead of generating residual differences. Those normalization parameters could include, for example, one or more scale and shift parameters.

In one embodiment, with the example inputs shown, encoder 200 encodes input image X_{P} into the latent space to generate unique features U_{P} and common features C_{P}. Based on unique features U_{P} and common features C_{P}, MLP 400 performs adaptive instance normalization with residual decoder 220 to cause residual decoder 220 to generate segmentation mask 410. Segmentation mask 410 indicates specific regions of input image X_{P} where the unique features reside.

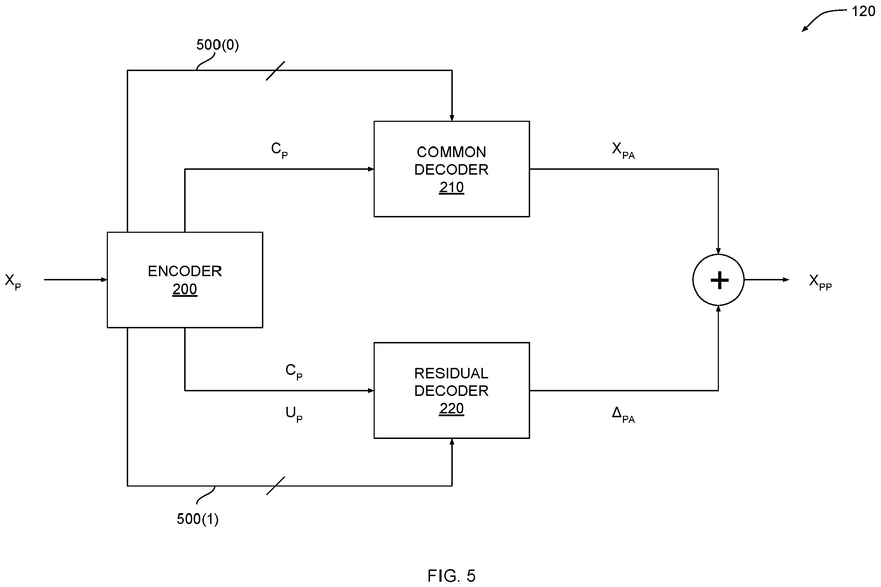

In one embodiment, neural network 120 may be augmented to recover spatial details associated with input images via the inclusion of long-skip connections, as described in greater detail below in conjunction with Figure 5.

### Recovering Spatial Detail

Figure 5 illustrates how the neural network of Figure 1 enhances spatial detail of translated images, according to various embodiments. As shown, in one embodiment, neural network 120 includes long-skip connections 500(0) between encoder 200 and common decoder 210 and long-skip connections 500(1) between encoder 200 and residual decoder 220. Long-skip connections 500(0) and 500(1) generally facilitate common decoder 210 and residual decoder 220, respectively, with recovering and/or enhancing spatial detail when translating images.

In one embodiment, long-skip connections 500(0) and 500(1) perform convolution operations with common features and unique features received from encoder 200 to generate compressed versions of those features. For example, a given long-skip connection 500 could compress a 64x64 feature map to generate an 8x8 feature map. Long-skip connections 500(0) and 500(1) then concatenate one or more of the resultant compressed features and feed the concatenated, compressed features forward to common decoder 210 and/or residual decoder 220. Common decoder 210 and residual decoder 210 may then generate translated images and/or residual differences with greater spatial accuracy.

Referring generally to Figures 1-5, in one embodiment, training engine 110 of Figure 1 can train encoder 200, common decoder 210, and residual decoder 220 using any technically feasible training approach, as previously mentioned, including those commonly associated with autoencoders. For example, training engine 110 could implement backpropagation with encoder 200, common decoder 210, and residual decoder 220 to reduce errors between input images and translated and/or combined images.

In one embodiment, during training, training engine 110 implements one or more of the objective functions set forth below in Table 1:

| | | |
|---|---|---|
| IMAGE RECONSTRUCTION | L1(XP, X_{PP}) + L₁(X_{A}, X_{AA}) + L₁(X_{P}, X_{PAP}) | OBJECTIVE FUNCTION 1 |
| LATENT SPACE RECONSTRUCTION | L₁(C_{P}, C_{PA}) + L₁(C_{A}, C_{AP}) + L₁(C_{A}, C_{AA}) + L₁(C_{P}, C_{PP}) + L₁ (U_{P}, U_{PP}) + L₁(U, U_{AP}) | OBJECTIVE FUNCTION 2 |
| ADVERSARIAL NETWORK | -D_{P}(X_{P}, X_{AP}) - D_{A}(X_{A}, X_{PA}) | OBJECTIVE FUNCTION 3 |
| SEGMENTATION | DICE(SEG) | OBJECTIVE FUNCTION 4 |

In one embodiment, training engine 110 trains common decoder 210 and residual decoder 220 based on Objective Function 1 in order to improve image reconstruction. Objective Function 1 includes various loss terms that can be evaluated based on specific input images and translated images. These input images and translated images are discussed above in conjunction with Figures 2-3.

In one embodiment, training engine 110 trains encoder 200 based on Objective Function 2 in order to improve latent space reconstruction. Objective Function 2 includes various loss terms that can be evaluated with specific common features and unique features. Some of these common features and unique features are discussed above in conjunction with Figures 2-3. Other common features and unique features set forth in Objective Function 2 can be generated by encoder 200 based on particular reconstructed images discussed above in conjunction with Figures 2-3. For example, C_{PA} could be generated by encoder 200 based on X_{PA} of Figure 2. Similarly, C_{AA} could be generated by encoder 200 based on X_{AA} of Figure 3. C_{PP} and U_{PP} could be generated by encoder 200 based on X_{PP} of Figure 2. U_{AP} could be generated by encoder 200 based on X_{AP} of Figure 2.

In one embodiment, training engine 110 includes a GAN, as mentioned above in conjunction with Figure 2, that is trained to discriminate between X_{P} from X_{AP} and X_{A} from X_{PA}. Training engine 110 can improve the discrimination capacity of the GAN based on Objective Function 3.

In one embodiment, training engine 110 trains MLP 400 to perform the adaptive instance normalization approach set forth above in conjunction with Figure 4 based on Objective Function 4. Objective Function 4 is evaluated to determine the Dice coefficient of segmentation mask 410.

### Segmentation via Image-to-Image Translation

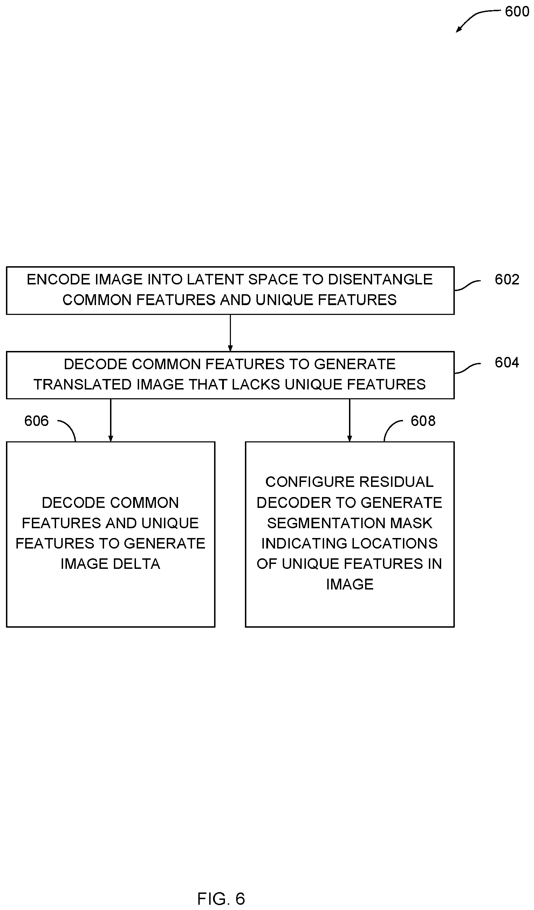

Figure 6 is a flow diagram of method steps for translating an image to generate a segmentation mask, according to various embodiments. Although the method steps are described in conjunction with the systems of Figures 1-5, persons skilled in the art will understand that any system configured to perform the method steps in any order falls within the scope of the present embodiments.

As shown, a method 600 begins at step 602, where encoder 200 of Figure 2 encodes an input image into a latent space to disentangle common features and unique features that may occur in the input image. In one embodiment, training engine 110 of Figure 1 trains encoder 200 based on weakly-labeled training data 112. Weakly-labeled training data 112 includes images 114(0) and 114(1). Certain features only occur within images 114(0), while other features occur in both images 114(0) and 114(1). In one embodiment, encoder 200 is a multi-layer convolutional neural network.

At step 604, common decoder 210 of Figure 2 decodes common features from the latent space to generate a translated image that lacks unique features. In one embodiment, training engine 110 of Figure 1 trains common decoder 210 based on weakly-labeled training data 112 in conjunction with training encoder 200 based on that training data. In one embodiment, common decoder 210 is a multi-layer deconvolutional neural network. In another embodiment, common decoder 210 receives one or more long-skip connections from encoder 200, as discussed above in conjunction with Figure 5. In some embodiments, during training operations, the method 600 proceeds to step 606. In some embodiments, during inference operations, the method 600 proceeds to step 608. In various embodiments, either or both of steps 606 and 608 may be performed, depending, for example, on one or more loss functions being implemented.

At step 606, residual decoder 220 of Figure 2 decodes unique features from the latent space to generate a residual image difference. The residual image difference may include pixel values that, when combined with the translated image generated via step 604, produce a translated image. The translated image may be a reconstructed version of the input image. During training, residual decoder 220 can be modified in order to reduce the difference between the input image and the reconstructed image. In one embodiment, residual decoder 220 is a multi-layer deconvolutional neural network. In another embodiment, residual decoder 220 receives one or more long-skip connections from encoder 200, as discussed above in conjunction with Figure 5. Step 606 is generally performed during training.

At step 608, neural network 120 configures residual decoder 220 to generate a segmentation mask indicating locations of unique features in the input image. In one embodiment, neural network 120 implements a multi-layer-perceptron (MLP) to perform adaptive instance normalization with residual decoder 220. For example, neural network 120 could implement MLP 400 of Figure 4 in order to perform scale and shift operations with common and unique features encoded into the latent space. Step 608 is generally performed during inference operations once training is complete.

### Example Hardware Architecture

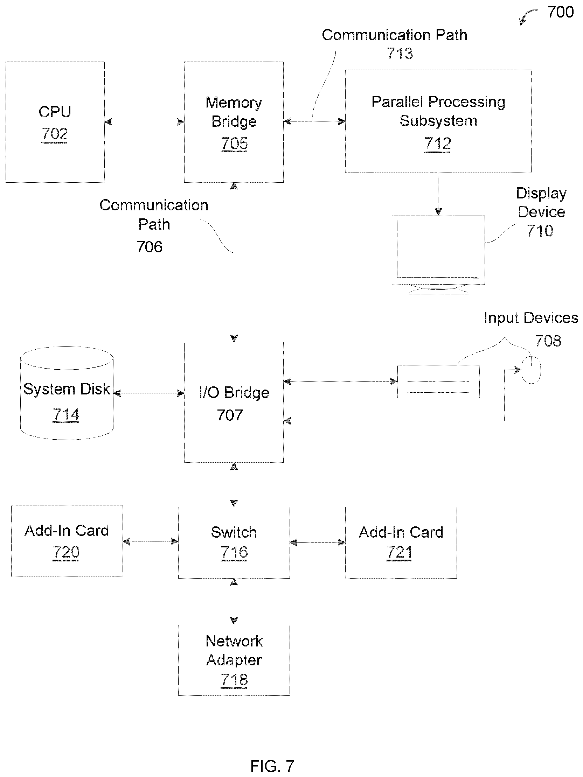

Figure 7 is a block diagram illustrating a computer system 700 configured to implement one or more aspects of various embodiments. In some embodiments, computer system 700 is a server machine operating in a data center or a cloud computing environment that provides scalable computing resources as a service over a network.

In various embodiments, computer system 700 includes, without limitation, a central processing unit (CPU) 702 and a system memory 704 coupled to a parallel processing subsystem 712 via a memory bridge 705 and a communication path 713. Memory bridge 705 is further coupled to an I/O (input/output) bridge 707 via a communication path 706, and I/O bridge 707 is, in turn, coupled to a switch 716.

In one embodiment, I/O bridge 707 is configured to receive user input information from optional input devices 708, such as a keyboard or a mouse, and forward the input information to CPU 702 for processing via communication path 706 and memory bridge 705. In some embodiments, computer system 700 may be a server machine in a cloud computing environment. In such embodiments, computer system 700 may not have input devices 708. Instead, computer system 700 may receive equivalent input information by receiving commands in the form of messages transmitted over a network and received via the network adapter 718. In one embodiment, switch 716 is configured to provide connections between I/O bridge 707 and other components of the computer system 700, such as a network adapter 718 and various add-in cards 720 and 721.

In one embodiment, I/O bridge 707 is coupled to a system disk 714 that may be configured to store content and applications and data for use by CPU 702 and parallel processing subsystem 712. In one embodiment, system disk 714 provides nonvolatile storage for applications and data and may include fixed or removable hard disk drives, flash memory devices, and CD-ROM (compact disc read-only-memory), DVD-ROM (digital versatile disc-ROM), Blu-ray, HD-DVD (high definition DVD), or other magnetic, optical, or solid state storage devices. In various embodiments, other components, such as universal serial bus or other port connections, compact disc drives, digital versatile disc drives, film recording devices, and the like, may be connected to I/O bridge 707 as well.

In various embodiments, memory bridge 705 may be a Northbridge chip, and I/O bridge 707 may be a Southbridge chip. In addition, communication paths 706 and 713, as well as other communication paths within computer system 700, may be implemented using any technically suitable protocols, including, without limitation, AGP (Accelerated Graphics Port), HyperTransport, or any other bus or point-to-point communication protocol known in the art.

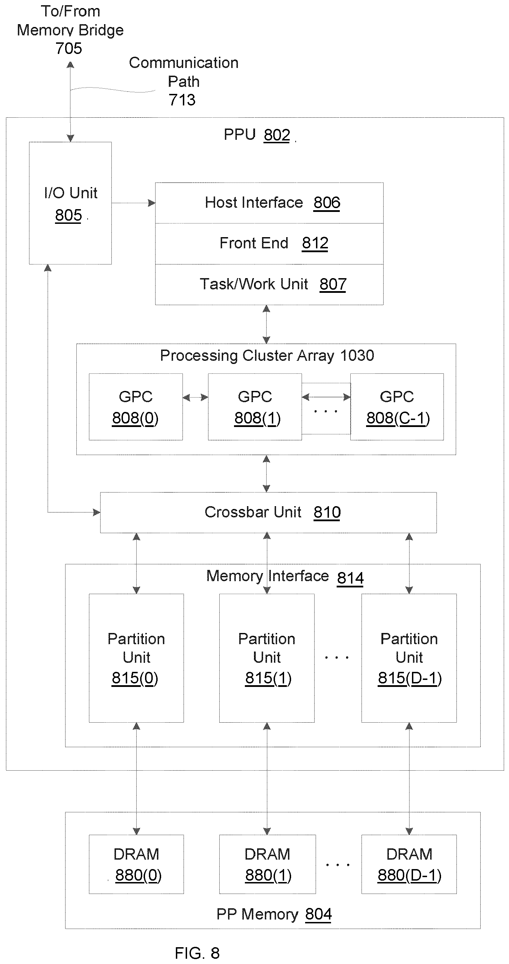

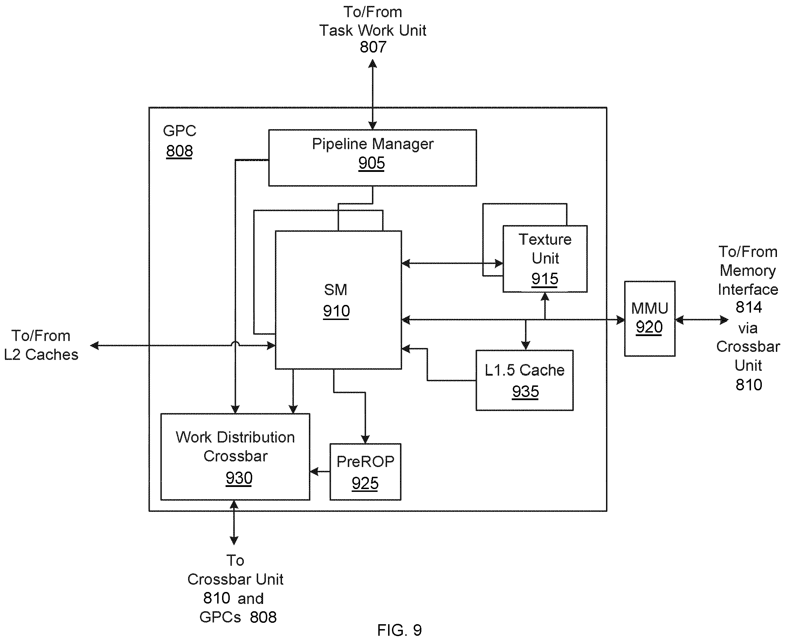

In some embodiments, parallel processing subsystem 712 comprises a graphics subsystem that delivers pixels to an optional display device 710 that may be any conventional cathode ray tube, liquid crystal display, light-emitting diode display, or the like. In such embodiments, the parallel processing subsystem 712 incorporates circuitry optimized for graphics and video processing, including, for example, video output circuitry. As described in greater detail below in conjunction with Figures 8 and 9, such circuitry may be incorporated across one or more parallel processing units (PPUs), also referred to herein as parallel processors, included within parallel processing subsystem 712. In other embodiments, the parallel processing subsystem 712 incorporates circuitry optimized for general purpose and/or compute processing. Again, such circuitry may be incorporated across one or more PPUs included within parallel processing subsystem 712 that are configured to perform such general purpose and/or compute operations. In yet other embodiments, the one or more PPUs included within parallel processing subsystem 712 may be configured to perform graphics processing, general purpose processing, and compute processing operations. System memory 704 includes at least one device driver configured to manage the processing operations of the one or more PPUs within parallel processing subsystem 712.

In various embodiments, parallel processing subsystem 712 may be integrated with one or more of the other elements of Figure 7 to form a single system. For example, parallel processing subsystem 712 may be integrated with CPU 702 and other connection circuitry on a single chip to form a system on chip (SoC).

In one embodiment, CPU 702 is the master processor of computer system 700, controlling and coordinating operations of other system components. In one embodiment, CPU 702 issues commands that control the operation of PPUs. In some embodiments, communication path 713 is a PCI Express link, in which dedicated lanes are allocated to each PPU, as is known in the art. Other communication paths may also be used. PPU advantageously implements a highly parallel processing architecture. A PPU may be provided with any amount of local parallel processing memory (PP memory).

It will be appreciated that the system shown herein is illustrative and that variations and modifications are possible. The connection topology, including the number and arrangement of bridges, the number of CPUs 702, and the number of parallel processing subsystems 712, may be modified as desired. For example, in some embodiments, system memory 704 could be connected to CPU 702 directly rather than through memory bridge 705, and other devices would communicate with system memory 704 via memory bridge 705 and CPU 702. In other embodiments, parallel processing subsystem 712 may be connected to I/O bridge 707 or directly to CPU 702, rather than to memory bridge 705. In still other embodiments, I/O bridge 707 and memory bridge 705 may be integrated into a single chip instead of existing as one or more discrete devices. Lastly, in certain embodiments, one or more components shown in Figure 7 may not be present. For example, switch 716 could be eliminated, and network adapter 718 and add-in cards 720, 721 would connect directly to I/O bridge 707.

Figure 8 is a block diagram of a parallel processing unit (PPU) 802 included in the parallel processing subsystem 712 of Figure 7, according to various embodiments. Although Figure 8 depicts one PPU 802, as indicated above, parallel processing subsystem 712 may include any number of PPUs 802. As shown, PPU 802 is coupled to a local parallel processing (PP) memory 804. PPU 802 and PP memory 804 may be implemented using one or more integrated circuit devices, such as programmable processors, application specific integrated circuits (ASICs), or memory devices, or in any other technically feasible fashion.

In some embodiments, PPU 802 comprises a graphics processing unit (GPU) that may be configured to implement a graphics rendering pipeline to perform various operations related to generating pixel data based on graphics data supplied by CPU 702 and/or system memory 704. When processing graphics data, PP memory 804 can be used as graphics memory that stores one or more conventional frame buffers and, if needed, one or more other render targets as well. Among other things, PP memory 804 may be used to store and update pixel data and deliver final pixel data or display frames to an optional display device 710 for display. In some embodiments, PPU 802 also may be configured for general-purpose processing and compute operations. In some embodiments, computer system 700 may be a server machine in a cloud computing environment. In such embodiments, computer system 700 may not have a display device 710. Instead, computer system 700 may generate equivalent output information by transmitting commands in the form of messages over a network via the network adapter 718.

In some embodiments, CPU 702 is the master processor of computer system 700, controlling and coordinating operations of other system components. In one embodiment, CPU 702 issues commands that control the operation of PPU 802. In some embodiments, CPU 702 writes a stream of commands for PPU 802 to a data structure (not explicitly shown in either Figure 7 or Figure 8) that may be located in system memory 704, PP memory 804, or another storage location accessible to both CPU 702 and PPU 802. A pointer to the data structure is written to a command queue, also referred to herein as a pushbuffer, to initiate processing of the stream of commands in the data structure. In one embodiment, the PPU 802 reads command streams from the command queue and then executes commands asynchronously relative to the operation of CPU 702. In embodiments where multiple pushbuffers are generated, execution priorities may be specified for each pushbuffer by an application program via device driver to control scheduling of the different pushbuffers.

In one embodiment, PPU 802 includes an I/O (input/output) unit 805 that communicates with the rest of computer system 700 via the communication path 713 and memory bridge 705. In one embodiment, I/O unit 805 generates packets (or other signals) for transmission on communication path 713 and also receives all incoming packets (or other signals) from communication path 713, directing the incoming packets to appropriate components of PPU 802. For example, commands related to processing tasks may be directed to a host interface 806, while commands related to memory operations (e.g., reading from or writing to PP memory 804) may be directed to a crossbar unit 810. In one embodiment, host interface 806 reads each command queue and transmits the command stream stored in the command queue to a front end 812.

As mentioned above in conjunction with Figure 7, the connection of PPU 802 to the rest of computer system 700 may be varied. In some embodiments, parallel processing subsystem 712, which includes at least one PPU 802, is implemented as an add-in card that can be inserted into an expansion slot of computer system 700. In other embodiments, PPU 802 can be integrated on a single chip with a bus bridge, such as memory bridge 705 or I/O bridge 707. Again, in still other embodiments, some or all of the elements of PPU 802 may be included along with CPU 702 in a single integrated circuit or system of chip (SoC).

In one embodiment, front end 812 transmits processing tasks received from host interface 806 to a work distribution unit (not shown) within task/work unit 807. In one embodiment, the work distribution unit receives pointers to processing tasks that are encoded as task metadata (TMD) and stored in memory. The pointers to TMDs are included in a command stream that is stored as a command queue and received by the front end unit 812 from the host interface 806. Processing tasks that may be encoded as TMDs include indices associated with the data to be processed as well as state parameters and commands that define how the data is to be processed. For example, the state parameters and commands could define the program to be executed on the data. Also for example, the TMD could specify the number and configuration of the set of CTAs. Generally, each TMD corresponds to one task. The task/work unit 807 receives tasks from the front end 812 and ensures that GPCs 808 are configured to a valid state before the processing task specified by each one of the TMDs is initiated. A priority may be specified for each TMD that is used to schedule the execution of the processing task. Processing tasks also may be received from the processing cluster array 830. Optionally, the TMD may include a parameter that controls whether the TMD is added to the head or the tail of a list of processing tasks (or to a list of pointers to the processing tasks), thereby providing another level of control over execution priority.

In one embodiment, PPU 802 implements a highly parallel processing architecture based on a processing cluster array 830 that includes a set of C general processing clusters (GPCs) 808, where C ≥ 1. Each GPC 808 is capable of executing a large number (e.g., hundreds or thousands) of threads concurrently, where each thread is an instance of a program. In various applications, different GPCs 808 may be allocated for processing different types of programs or for performing different types of computations. The allocation of GPCs 808 may vary depending on the workload arising for each type of program or computation.

In one embodiment, memory interface 814 includes a set of D of partition units 815, where D ≥ 1. Each partition unit 815 is coupled to one or more dynamic random access memories (DRAMs) 820 residing within PPM memory 804. In some embodiments, the number of partition units 815 equals the number of DRAMs 820, and each partition unit 815 is coupled to a different DRAM 820. In other embodiments, the number of partition units 815 may be different than the number of DRAMs 820. Persons of ordinary skill in the art will appreciate that a DRAM 820 may be replaced with any other technically suitable storage device. In operation, various render targets, such as texture maps and frame buffers, may be stored across DRAMs 820, allowing partition units 815 to write portions of each render target in parallel to efficiently use the available bandwidth of PP memory 804.

In one embodiment, a given GPC 808 may process data to be written to any of the DRAMs 820 within PP memory 804. In one embodiment, crossbar unit 810 is configured to route the output of each GPC 808 to the input of any partition unit 815 or to any other GPC 808 for further processing. GPCs 808 communicate with memory interface 814 via crossbar unit 810 to read from or write to various DRAMs 820. In some embodiments, crossbar unit 810 has a connection to I/O unit 805, in addition to a connection to PP memory 804 via memory interface 814, thereby enabling the processing cores within the different GPCs 808 to communicate with system memory 704 or other memory not local to PPU 802. In the embodiment of Figure 8, crossbar unit 810 is directly connected with I/O unit 805. In various embodiments, crossbar unit 810 may use virtual channels to separate traffic streams between the GPCs 808 and partition units 815.

In one embodiment, GPCs 808 can be programmed to execute processing tasks relating to a wide variety of applications, including, without limitation, linear and nonlinear data transforms, filtering of video and/or audio data, modeling operations (e.g., applying laws of physics to determine position, velocity and other attributes of objects), image rendering operations (e.g., tessellation shader, vertex shader, geometry shader, and/or pixel/fragment shader programs), general compute operations, etc. In operation, PPU 802 is configured to transfer data from system memory 704 and/or PP memory 804 to one or more on-chip memory units, process the data, and write result data back to system memory 704 and/or PP memory 804. The result data may then be accessed by other system components, including CPU 702, another PPU 802 within parallel processing subsystem 712, or another parallel processing subsystem 712 within computer system 700.

In one embodiment, any number of PPUs 802 may be included in a parallel processing subsystem 712. For example, multiple PPUs 802 may be provided on a single add-in card, or multiple add-in cards may be connected to communication path 713, or one or more of PPUs 802 may be integrated into a bridge chip. PPUs 802 in a multi-PPU system may be identical to or different from one another. For example, different PPUs 802 might have different numbers of processing cores and/or different amounts of PP memory 804. In implementations where multiple PPUs 802 are present, those PPUs may be operated in parallel to process data at a higher throughput than is possible with a single PPU 802. Systems incorporating one or more PPUs 802 may be implemented in a variety of configurations and form factors, including, without limitation, desktops, laptops, handheld personal computers or other handheld devices, servers, workstations, game consoles, embedded systems, and the like.

Figure 9 is a block diagram of a general processing cluster (GPC) 808 included in the parallel processing unit (PPU) 802 of Figure 8, according to various embodiments. As shown, the GPC 808 includes, without limitation, a pipeline manager 905, one or more texture units 915, a preROP unit 925, a work distribution crossbar 930, and an L1.5 cache 935.

In one embodiment, GPC 808 may be configured to execute a large number of threads in parallel to perform graphics, general processing and/or compute operations. As used herein, a "thread" refers to an instance of a particular program executing on a particular set of input data. In some embodiments, single-instruction, multiple-data (SIMD) instruction issue techniques are used to support parallel execution of a large number of threads without providing multiple independent instruction units. In other embodiments, single-instruction, multiple-thread (SIMT) techniques are used to support parallel execution of a large number of generally synchronized threads, using a common instruction unit configured to issue instructions to a set of processing engines within GPC 808. Unlike a SIMD execution regime, where all processing engines typically execute identical instructions, SIMT execution allows different threads to more readily follow divergent execution paths through a given program. Persons of ordinary skill in the art will understand that a SIMD processing regime represents a functional subset of a SIMT processing regime.

In one embodiment, operation of GPC 808 is controlled via a pipeline manager 905 that distributes processing tasks received from a work distribution unit (not shown) within task/work unit 807 to one or more streaming multiprocessors (SMs) 910. Pipeline manager 905 may also be configured to control a work distribution crossbar 930 by specifying destinations for processed data output by SMs 910.

In various embodiments, GPC 808 includes a set of M of SMs 910, where M ≥ 1. Also, each SM 910 includes a set of functional execution units (not shown), such as execution units and load-store units. Processing operations specific to any of the functional execution units may be pipelined, which enables a new instruction to be issued for execution before a previous instruction has completed execution. Any combination of functional execution units within a given SM 910 may be provided. In various embodiments, the functional execution units may be configured to support a variety of different operations including integer and floating point arithmetic (e.g., addition and multiplication), comparison operations, Boolean operations (AND, OR, XOR), bit-shifting, and computation of various algebraic functions (e.g., planar interpolation and trigonometric, exponential, and logarithmic functions, etc.). Advantageously, the same functional execution unit can be configured to perform different operations.

In various embodiments, each SM 910 includes multiple processing cores. In one embodiment, the SM 910 includes a large number (e.g., 128, etc.) of distinct processing cores. Each core may include a fully-pipelined, single-precision, double-precision, and/or mixed precision processing unit that includes a floating point arithmetic logic unit and an integer arithmetic logic unit. In one embodiment, the floating point arithmetic logic units implement the IEEE 754-2008 standard for floating point arithmetic. In one embodiment, the cores include 64 single-precision (32-bit) floating point cores, 64 integer cores, 32 double-precision (64-bit) floating point cores, and 8 tensor cores.

In one embodiment, tensor cores configured to perform matrix operations, and, in one embodiment, one or more tensor cores are included in the cores. In particular, the tensor cores are configured to perform deep learning matrix arithmetic, such as convolution operations for neural network training and inferencing. In one embodiment, each tensor core operates on a 4×4 matrix and performs a matrix multiply and accumulate operation D=A×B+C, where A, B, C, and D are 4×4 matrices.

In one embodiment, the matrix multiply inputs A and B are 16-bit floating point matrices, while the accumulation matrices C and D may be 16-bit floating point or 32-bit floating point matrices. Tensor Cores operate on 16-bit floating point input data with 32-bit floating point accumulation. The 16-bit floating point multiply requires 64 operations and results in a full precision product that is then accumulated using 32-bit floating point addition with the other intermediate products for a 4×4×4 matrix multiply. In practice, Tensor Cores are used to perform much larger two-dimensional or higher dimensional matrix operations, built up from these smaller elements. An API, such as CUDA 9 C++ API, exposes specialized matrix load, matrix multiply and accumulate, and matrix store operations to efficiently use tensor cores from a CUDA-C++ program. At the CUDA level, the warp-level interface assumes 16×16 size matrices spanning all 32 threads of the warp.

Neural networks rely heavily on matrix math operations, and complex multilayered networks require tremendous amounts of floating-point performance and bandwidth for both efficiency and speed. In various embodiments, with thousands of processing cores, optimized for matrix math operations, and delivering tens to hundreds of TFLOPS of performance, the SMs 910 provide a computing platform capable of delivering performance required for deep neural network-based artificial intelligence and machine learning applications.

In various embodiments, each SM 910 may also comprise multiple special function units (SFUs) that perform special functions (e.g., attribute evaluation, reciprocal square root, and the like). In one embodiment, the SFUs may include a tree traversal unit configured to traverse a hierarchical tree data structure. In one embodiment, the SFUs may include texture unit configured to perform texture map filtering operations. In one embodiment, the texture units are configured to load texture maps (e.g., a 2D array of texels) from memory and sample the texture maps to produce sampled texture values for use in shader programs executed by the SM. In various embodiments, each SM 910 also comprises multiple load/store units (LSUs) that implement load and store operations between the shared memory/L1 cache and register files internal to the SM 910.

In one embodiment, each SM 910 is configured to process one or more thread groups. As used herein, a "thread group" or "warp" refers to a group of threads concurrently executing the same program on different input data, with one thread of the group being assigned to a different execution unit within an SM 910. A thread group may include fewer threads than the number of execution units within the SM 910, in which case some of the execution may be idle during cycles when that thread group is being processed. A thread group may also include more threads than the number of execution units within the SM 910, in which case processing may occur over consecutive clock cycles. Since each SM 910 can support up to G thread groups concurrently, it follows that up to G*M thread groups can be executing in GPC 808 at any given time.

Additionally, in one embodiment, a plurality of related thread groups may be active (in different phases of execution) at the same time within an SM 910. This collection of thread groups is referred to herein as a "cooperative thread array" ("CTA") or "thread array." The size of a particular CTA is equal to m*k, where k is the number of concurrently executing threads in a thread group, which is typically an integer multiple of the number of execution units within the SM 910, and m is the number of thread groups simultaneously active within the SM 910. In some embodiments, a single SM 910 may simultaneously support multiple CTAs, where such CTAs are at the granularity at which work is distributed to the SMs 910.

In one embodiment, each SM 910 contains a level one (L1) cache or uses space in a corresponding L1 cache outside of the SM 910 to support, among other things, load and store operations performed by the execution units. Each SM 910 also has access to level two (L2) caches (not shown) that are shared among all GPCs 808 in PPU 802. The L2 caches may be used to transfer data between threads. Finally, SMs 910 also have access to off-chip "global" memory, which may include PP memory 804 and/or system memory 704. It is to be understood that any memory external to PPU 802 may be used as global memory. Additionally, as shown in Figure 9, a level one-point-five (L1.5) cache 935 may be included within GPC 808 and configured to receive and hold data requested from memory via memory interface 814 by SM 910. Such data may include, without limitation, instructions, uniform data, and constant data. In embodiments having multiple SMs 910 within GPC 808, the SMs 910 may beneficially share common instructions and data cached in L1.5 cache 935.

In one embodiment, each GPC 808 may have an associated memory management unit (MMU) 920 that is configured to map virtual addresses into physical addresses. In various embodiments, MMU 920 may reside either within GPC 808 or within the memory interface 814. The MMU 920 includes a set of page table entries (PTEs) used to map a virtual address to a physical address of a tile or memory page and optionally a cache line index. The MMU 920 may include address translation lookaside buffers (TLB) or caches that may reside within SMs 910, within one or more L1 caches, or within GPC 808.

In one embodiment, in graphics and compute applications, GPC 808 may be configured such that each SM 910 is coupled to a texture unit 915 for performing texture mapping operations, such as determining texture sample positions, reading texture data, and filtering texture data.

In one embodiment, each SM 910 transmits a processed task to work distribution crossbar 930 in order to provide the processed task to another GPC 808 for further processing or to store the processed task in an L2 cache (not shown), parallel processing memory 804, or system memory 704 via crossbar unit 810. In addition, a pre-raster operations (preROP) unit 925 is configured to receive data from SM 910, direct data to one or more raster operations (ROP) units within partition units 815, perform optimizations for color blending, organize pixel color data, and perform address translations.

It will be appreciated that the architecture described herein is illustrative and that variations and modifications are possible. Among other things, any number of processing units, such as SMs 910, texture units 915, or preROP units 925, may be included within GPC 808. Further, as described above in conjunction with Figure 8, PPU 802 may include any number of GPCs 808 that are configured to be functionally similar to one another so that execution behavior does not depend on which GPC 808 receives a particular processing task. Further, each GPC 808 operates independently of the other GPCs 808 in PPU 802 to execute tasks for one or more application programs.

In sum, a neural network is trained based on weakly-labeled training data that includes a first set of images that include a unique feature and a second set of images that do not include the unique feature. The weakly-labeled training data includes a label for each image indicating the presence or absence of the unique feature. The two sets of images also include various other features that are common to both sets of images. The neural network includes an encoder, a common decoder, and a residual decoder. The encoder encodes input images into a latent space. The latent space disentangles unique features of the input images from common features of the input images. The common decoder decodes common features resident in the latent space to generate translated images which lack the unique features. The residual decoder decodes unique features resident in the latent space to generate image deltas corresponding to the unique features. The neural network combines the translated images with the image deltas to generate combined images that may include both common features and unique features. The combined images can be used to drive autoencoding. Once training is complete, the residual decoder can be modified to generate segmentation masks instead of image deltas. A given segmentation mask indicates any regions of a given input image where a unique feature resides.

At least one technological advantage of the disclosed techniques relative to the prior art is that images can be accurately segmented based only on weakly-labeled training data. Accordingly, features of interest can be readily identified within images without needing to perform a complex manual process to generate training data. Another technological advantage of the disclosed techniques relative to the prior art is that fewer reference segmentations are needed to train the neural network compared to conventional approaches, thereby simplifying and expediting the training process. These technological advantages represent multiple technological advancements relative to prior art approaches.
1. Some embodiments include a computer-implemented method comprising generating a feature representation of an input image, wherein the input image includes a first feature associated with a first feature type and one or more additional features associated with a second feature type, decoding, using a first decoder associated with the first feature type, the feature representation to generate a first image that includes the first feature but not the one or more additional features, decoding, using a second decoder associated with the second feature type, the feature representation to generate a second image that includes the one or more additional features but not the first feature, combining the first image and the second image to generate a third image, comparing the input image and the third image to determine a difference between the input image and the third image, and updating the first decoder based on the difference between the input image and the third image to enable the first decoder to generate a segmentation mask that identifies a location of a given feature associated with the first feature type in a given image.
2. The computer-implemented method of clause 1, wherein generating the feature representation of the input image comprises encoding, using a first encoder, the input image into a latent space.
3. The computer-implemented method of any of clauses 1-2, wherein the first feature type corresponds to a first region of the latent space and the second feature type corresponds to a second region of the latent space.
4. The computer-implemented method of any of clauses 1-3, further comprising updating the first encoder based on the difference between the input image and the third image to enable the first encoder to encode the first feature into a first region of the latent space and encode the one or more additional features into a second region of the latent space.
5. The computer-implemented method of any of clauses 1-4, wherein the first encoder is coupled to the first decoder via a set of long-skip connections that compresses and/or concatenates at least a portion of the feature representation for input to the first decoder.
6. The computer-implemented method of any of clauses 1-5, wherein the first encoder is coupled to the second decoder via a set of long-skip connections that compresses and/or concatenates at least a portion of the feature representation for input to the second decoder.
7. The computer-implemented method of any of clauses 1-6, further comprising updating the feature representation based on a translated image, wherein the translated image has been modified to remove the first feature, decoding, using the second decoder, the feature representation to generate a fourth image that includes the one or more additional features but not the first feature, and updating the second decoder based on the difference between the translated image and the fourth image.
8. The computer-implemented method of any of clauses 1-7, further comprising generating the segmentation mask based, at least in part, on one or more scale and shift parameters.
9. The computer-implemented method of any of clauses 1-8, wherein updating the first decoder based on the difference between the input image and the third image comprises evaluating a first objective function that indicates a first loss value associated with the input image and the third image.
10. The computer-implemented method of any of clauses 1-9, wherein updating the first decoder based on the difference between the input image and the third image comprises evaluating a second objective function that indicates a first loss value associated with the first feature and a version of the first feature translated to remove the first feature.
11. Some embodiments include a non-transitory computer-readable medium storing program instructions that, when executed by at least one processor, cause the at least one processor to at least generate a feature representation of an input image, wherein the input image includes a first feature associated with a first feature type and one or more additional features associated with a second feature type, decode, using a first decoder associated with the first feature type, the feature representation to generate a first image that includes the first feature but not the one or more additional features, decode, using a second decoder associated with the second feature type, the feature representation to generate a second image that includes the one or more additional features but not the first feature, combine the first image and the second image to generate a third image, compare the input image and the third image to determine a difference between the input image and the third image, and update the first decoder based on the difference between the input image and the third image to enable the first decoder to generate a segmentation mask that identifies a location of a given feature associated with the first feature type in a given image.
12. The non-transitory computer-readable medium of clause 11, wherein the at least one processor generates the feature representation of the input image by encoding, using a first encoder, the input image into a latent space.
13. The non-transitory computer-readable medium of any of clauses 11-12, wherein the first feature type corresponds to a first region of the latent space and the second feature type corresponds to a second region of the latent space, and wherein the at least one processor updates the first encoder based on the difference between the input image and the third image to enable the first encoder to encode the first feature into the first region of the latent space and encode the one or more additional features into the second region of the latent space.
14. The non-transitory computer-readable medium of any of clauses 11-13, wherein the first encoder is coupled to the first decoder via a set of long-skip connections that compresses and concatenates one or more portions of the feature representation for input to the first decoder.
15. The non-transitory computer-readable medium of any of clauses 11-14, wherein the first encoder is coupled to the second decoder via a set of long-skip connections that compresses and concatenates one or more portions of the feature representation for input to the second decoder.
16. The non-transitory computer-readable medium of any of clauses 11-15, wherein the at least one processor trains the decoder by updating the feature representation based on a translated image that does not include the first feature, wherein the translated image comprises a modified version of a training image that includes the first feature, decoding, using the second decoder, the feature representation to generate a fourth image that includes the one or more additional features but not the first feature, and updating the second decoder based on the difference between the translated image and the fourth image.
17. The non-transitory computer-readable medium of any of clauses 11-16, further comprising generating the segmentation mask based, at least in part, on one or more scale and shift parameters.
18. Some embodiments include a system, comprising a memory storing one or more instructions, and a processor that executes the instructions to at least generate a feature representation of an input image, wherein the input image includes a first feature associated with a first feature type and one or more additional features associated with a second feature type, decode, using a first decoder associated with the first feature type, the feature representation to generate a first image that includes the first feature but not the one or more additional features, decode, using a second decoder associated with the second feature type, the feature representation to generate a second image that includes the one or more additional features but not the first feature, combine the first image and the second image to generate a third image, compare the input image and the third image to determine a difference between the input image and the third image, and update the first decoder based on the difference between the input image and the third image to enable the first decoder to generate a segmentation mask that identifies a location of a given feature associated with the first feature type in a given image.
19. Some embodiments include a system, comprising a memory storing one or more instructions, and a processor that executes the instructions to at least generate a feature representation of an input image, wherein the input image includes a first feature associated with a first feature type and one or more additional features associated with a second feature type, decode, using a first decoder associated with the first feature type, the feature representation to generate a first image that includes the first feature but not the one or more additional features, decode, using a second decoder associated with the second feature type, the feature representation to generate a second image that includes the one or more additional features but not the first feature, combine the first image and the second image to generate a third image, compare the input image and the third image to determine a difference between the input image and the third image, and update the first decoder based on the difference between the input image and the third image to enable the first decoder to generate a segmentation mask that identifies a location of a given feature associated with the first feature type in a given image.
20. The system of any of clauses 18-19, wherein the processor generates the feature representation of the input image by analyzing a label associated with the input image indicating that the first feature is present in the input image, and updating an encoder that generates the feature representation based on the label.

Any and all combinations of any of the claim elements recited in any of the claims and/or any elements described in this application, in any fashion, fall within the contemplated scope of the present disclosure and protection.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A computer-implemented method comprising:
generating a feature representation of an input image, wherein the input image includes a first feature associated with a first feature type and one or more additional features associated with a second feature type;
decoding, using a first decoder associated with the first feature type, the feature representation to generate a first image that includes the first feature but not the one or more additional features;
decoding, using a second decoder associated with the second feature type, the feature representation to generate a second image that includes the one or more additional features but not the first feature;
combining the first image and the second image to generate a third image;
comparing the input image and the third image to determine a difference between the input image and the third image; and
updating the first decoder based on the difference between the input image and the third image to enable the first decoder to generate a segmentation mask that identifies a location of a given feature associated with the first feature type in a given image.

2. The computer-implemented method of claim 1, wherein generating the feature representation of the input image comprises encoding, using a first encoder, the input image into a latent space.

3. The computer-implemented method of claim 2, wherein the first feature type corresponds to a first region of the latent space and the second feature type corresponds to a second region of the latent space.

4. The computer-implemented method of claim 2 or 3, further comprising updating the first encoder based on the difference between the input image and the third image to enable the first encoder to encode the first feature into a first region of the latent space and encode the one or more additional features into a second region of the latent space.

5. The computer-implemented method of any of claims 2 to 4, wherein the first encoder is coupled to the first decoder via a set of long-skip connections that compresses and/or concatenates at least a portion of the feature representation for input to the first decoder.

6. The computer-implemented method of any of claims 2 to 5, wherein the first encoder is coupled to the second decoder via a set of long-skip connections that compresses and/or concatenates at least a portion of the feature representation for input to the second decoder.

7. The computer-implemented method of any of the preceding claims, further comprising:
updating the feature representation based on a translated image, wherein the translated image has been modified to remove the first feature;
decoding, using the second decoder, the feature representation to generate a fourth image that includes the one or more additional features but not the first feature; and
updating the second decoder based on the difference between the translated image and the fourth image.

8. The computer-implemented method of any of the preceding claims, further comprising generating the segmentation mask based, at least in part, on one or more scale and shift parameters.

9. The computer-implemented method of any of the preceding claims, wherein updating the first decoder based on the difference between the input image and the third image comprises evaluating a first objective function that indicates a first loss value associated with the input image and the third image.

10. The computer-implemented method of any of the preceding claims, wherein updating the first decoder based on the difference between the input image and the third image comprises evaluating a second objective function that indicates a first loss value associated with the first feature and a version of the first feature translated to remove the first feature.

11. A non-transitory computer-readable medium storing program instructions that, when executed by at least one processor, cause the at least one processor to carry out a computer implemented method as mentioned in any of claims 1 to 10.

12. The non-transitory computer-readable medium of claim 11, wherein the at least one processor trains the decoder by:
updating the feature representation based on a translated image that does not include the first feature, wherein the translated image comprises a modified version of a training image that includes the first feature;
decoding, using the second decoder, the feature representation to generate a fourth image that includes the one or more additional features but not the first feature; and
updating the second decoder based on the difference between the translated image and the fourth image.

13. The non-transitory computer-readable medium of claim 11 or 12, wherein generating the feature representation of the input image comprises analyzing a label associated with the input image indicating that the first feature is present in the input image.

14. A system, comprising:
a memory storing one or more instructions; and
a processor that executes the instructions to carry out a method as mentioned in any of claims 1 to 10.

15. The system of claim 14, wherein the processor generates the feature representation of the input image by:
analyzing a label associated with the input image indicating that the first feature is present in the input image; and
updating an encoder that generates the feature representation based on the label.
